(19) Europäisches Patentamt / European Patent Office / Office européen des brevets

(11) **EP 4 693 111 A1**

(12) **EUROPEAN PATENT APPLICATION**
published in accordance with Art. 153(4) EPC

(43) Date of publication:
**11.02.2026 Bulletin 2026/07**

(21) Application number: **23930472.8**

(22) Date of filing: **29.03.2023**

(51) International Patent Classification (IPC):
**G06N 3/126** (2023.01)   **G06N 99/00** (2019.01)

(52) Cooperative Patent Classification (CPC):
**G06N 3/126; G06N 99/00**

(86) International application number:
**PCT/JP2023/012942**

(87) International publication number:
**WO 2024/201834 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Fujitsu Limited
Kawasaki-shi, Kanagawa 211-8588 (JP)**

(72) Inventors:
• **ITANI, Norihiko
  Kawasaki-shi, Kanagawa 211-8588 (JP)**
• **IKEDA, Hiroshi
  Kawasaki-shi, Kanagawa 211-8588 (JP)**
• **YAMAZAKI, Takashi
  Kawasaki-shi, Kanagawa 211-8588 (JP)**

(74) Representative: **Haseltine Lake Kempner LLP
Cheapside House
138 Cheapside
London EC2V 6BJ (GB)**

(54)   **CALCULATION PROGRAM, CALCULATION METHOD, AND INFORMATION PROCESSING DEVICE**

(57)   A calculation program causes a computer to execute, when repeatedly searching for a solution using evolutionary computation based on an evaluation function that evaluates multiple objective functions, control a search direction for the solution according to a distribution of Pareto solutions obtained, and searching for a next generation of solutions.

FIG. 4

FIG. 4

## Description

TECHNICAL FIELD

The present invention relates to a calculation program, a calculation method and an information processing device.

BACKGROUND ART

Technologies related to multi-objective optimization, which simultaneously optimizes multiple objective functions, have been disclosed (see, for example, Patent Documents 1 and 2).

CITATION LIST

PATENT DOCUMENT

PATENT DOCUMENT 1: Japanese Patent Application Publication No. 2002-203228
PATENT DOCUMENT 2: Japanese Patent Application Publication No. 2022-106186

SUMMARY OF THE INVENTION

TECHNICAL PROBLEM

However, in multi-objective optimization, the solution search direction is fixed, so there is a risk that highly uniform Pareto solutions is not obtained.
In one aspect, the present invention aims to provide an information processing device, a calculation method, and a calculation program that can dynamically change the direction of a solution search.

SOLUTION TO PROBLEM

In one aspect, a calculation program causes a computer to executes, when repeatedly searching for a solution using evolutionary computation based on an evaluation function that evaluates multiple objective functions, control a search direction for the solution according to a distribution of Pareto solutions obtained, and searching for a next generation of solutions.

ADVANTAGEOUS EFFECTS OF INVENTION]

The direction of a solution search can be dynamically changed.

BRIEF DESCRIPTION OF THE DRAWINGS

[FIG. 1] Provided is a diagram illustrating a Pareto solution.

[FIG. 2] Provided is a diagram illustrating use of a genetic algorithm in a multi-objective optimization engine.

[FIG. 3] Provided is a flowchart of processing step of a genetic algorithm, which is an example of evolutionary computation.

[FIG. 4] Provided is a diagram illustrating a case where there are two evaluation functions.

[FIG. 5] Provided is a diagram for describing a hypervolume.

[FIG. 6] Provided is a diagram illustrating results of a predetermined number of evolutionary computations.

[FIG. 7] (a) is a functional block diagram of an overall configuration of an information processing device according to a first embodiment, and (b) is a hardware configuration diagram of an information processing device.

[FIG. 8] Provided is a diagram illustrating a flowchart of an optimization process.

[FIG. 9] Provided is a flowchart of details of step S3.

[FIG. 10] (a) to (c) are diagrams illustrating detection of a region with sparse solution distribution when there are two evaluation functions.

[FIG. 11] (a) to (c) are diagrams illustrating detection of a region with sparse solution distribution when there are three evaluation functions.

[FIG. 12] Provided is a diagram illustrating a case where a wide gap occurs in distribution of exact solutions.

[FIG. 13] Provided is a flowchart for considering a case where a wide gap occurs in distribution of exact solutions that should be obtained in step S3.

[FIG. 14] Provided is a flowchart of details of step S34.

[FIG. 15] (a) and (b) are diagrams comparing search processes for Pareto solutions.

[FIG. 16] (a) and (b) are diagrams comparing search processes for Pareto solutions.

[FIG. 17] (a) and (b) are diagrams comparing search processes for Pareto solutions.

[FIG. 18] (a) and (b) are diagrams comparing search processes for Pareto solutions.

[FIG. 19] Provided is a diagram of exact solutions for standard problems.

[FIG. 20] (a) and (b) are diagrams comparing search processes for Pareto solutions.

[FIG. 21] (a) and (b) are diagrams comparing search processes for Pareto solutions.

[FIG. 22] (a) and (b) are diagrams comparing search processes for Pareto solutions.

[FIG. 23] Provided is a diagram of a relationship between a number of generations and GD.

[FIG. 24] Provided is a diagram illustrating a case where multi-objective optimization is performed after single-objective optimization.

DESCRIPTION OF EMBODIMENTS

Optimization problems exist in a variety of industries, including manufacturing and distribution. For example, in the optimization of production plans at manufacturing sites, there is a trade-off between the manufacturing time required for a certain production plan and the costs incurred in proportion to the equipment's operating time. For example, there is a trade-off problem where shortening the manufacturing time increases the operating time of legacy equipment with high operating costs, resulting in increased costs.

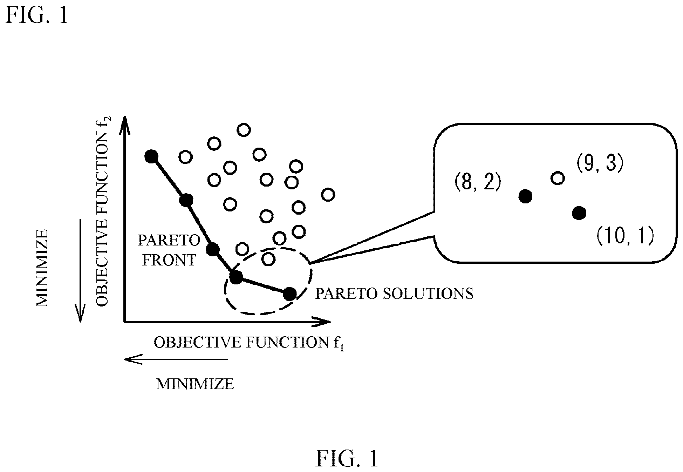

Multi-objective optimization problems that simultaneously optimize multiple objective functions that are in a trade-off relationship generally involve finding a Pareto solution. In the above example, the manufacturing time required for a certain production plan and the costs incurred in proportion to the equipment's operating time are the objective functions. The explanatory variables are the production plan, such as the order in which each product is guided into the production process. A Pareto solution is a solution in which at least one of the multiple objective functions is superior to any other solution. FIG. 1 illustrates an example of a Pareto solution. In FIG. 1, the solution $(f1, f2) = (9, 3)$ is not a Pareto solution because there is no objective function that is superior to $(f1, f2) = (8, 2)$.

In the example in FIG. 1, optimization is performed to minimize each objective function, resulting in a Pareto solution located in the lower left. The line connecting each Pareto solution (the arrangement of each Pareto solution) is called a Pareto front. From the Pareto solutions obtained through multi-objective optimization calculations, users select the optimal solution that suits their purpose. Therefore, to provide the users with more optimal and more options, Pareto solutions must be "breadth," "convergence to an exact solution," and "uniformity". "Uniformity" means that the Pareto solutions are uniform in their breadth and distribution, and that the exact solutions are evenly distributed.

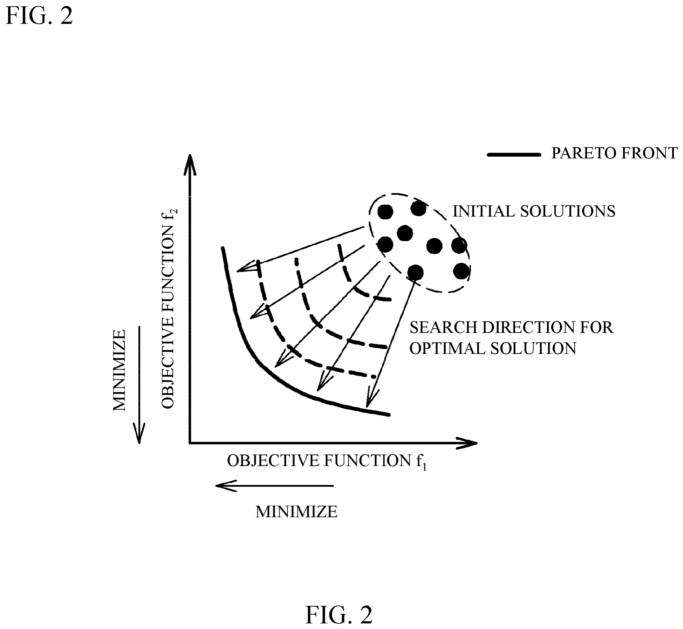

For example, consider a case where multiple objective functions to be optimized are set as the evaluation function of a multi-objective optimization engine and a multi-objective optimization calculation is performed. FIG. 2 illustrates an example of a multi-objective optimization engine using evolutionary computing. Evolutionary computing is a method for searching for solutions over a wide range of initial solutions so that each objective function is minimized. In the example illustrated in FIG. 2, the search direction corresponds to moving left and down from the initial solution.

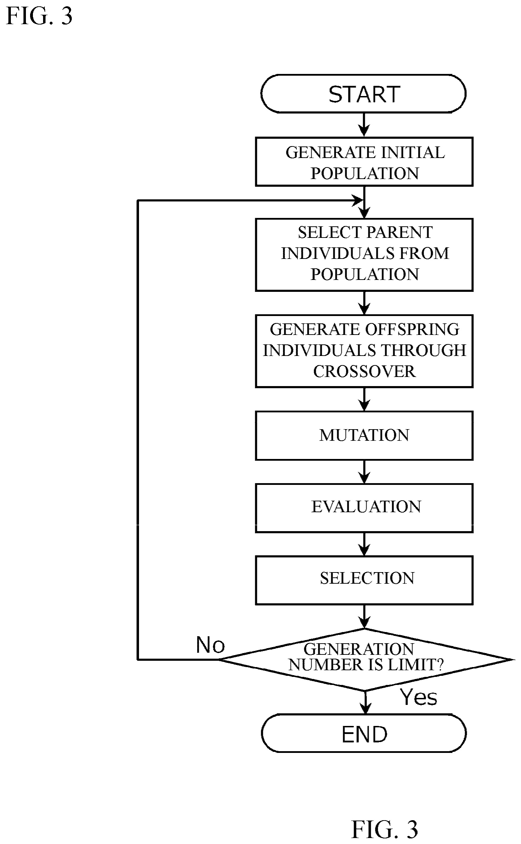

FIG. 3 is a flowchart of the processing steps of a genetic algorithm, an example of evolutionary computing. First, an initial population is generated. Next, parent individuals are selected from the population. Next, offspring individuals are generated from the parent individuals through crossover. Through crossover, offspring individuals inheriting the traits of the parent individual pair selected through selection are generated. Next, traits are randomly changed through mutation. Next, individuals with high fitness (evaluation value) are allowed to survive into the next generation, while individuals with low fitness (evaluation value) are eliminated from the population and selected. In this way, genetic factors are incorporated, and the evaluation function is optimized to improve with each generation.

However, in multi-objective optimization, the solution search direction is fixed, so there is a risk that highly uniform Pareto solutions are obtained. Therefore, the following embodiment describes an information processing device, a calculation method, and a calculation program that can dynamically change the solution search direction.

[First Embodiment]

In this embodiment, when the process of evolving solutions using evolutionary computing to improve the evaluation function for evaluating multiple objective functions and searching for solutions is repeated, the solution search direction is controlled according to the distribution of the obtained Pareto solutions to search for the next generation of solutions. The specific solution principle is described below.

The case where there are m objective functions will be described. Each of the m objective functions is an evaluation function. The m evaluation functions are $f_1$, $f_2$, ..., $f_m$. f(x) is the evaluation function value for solution x. Therefore, $f_1(x_1)$ is the evaluation function value of evaluation function f1 for solution $x_1$.

In this embodiment, when controlling the solution search direction, a control point is set based on the density of the distribution of Pareto solutions obtained up to that point, and this control point is reflected in the solution search direction. As an example, a sparse area in the distribution of Pareto solutions obtained up to that point is detected, and a control point is set within that area.

The set control point is set as a new evaluation function $f_{m+1}$. Then, the evaluation function f = {$f_1$, $f_2$, ..., $f_m$, $f_{m+1}$} used to search for a solution is optimized. In this embodiment, as an example, the smaller the value of each objective function, the better. Therefore, in this embodiment, a solution is searched for to minimize the evaluation function f = {$f_1$, $f_2$, ..., $f_m$, $f_{m+1}$}. If the coordinates of the control points are ($c_{f1}(n)$, $c_{f2}(n)$, ..., $c_{fm}(n)$), $f_{m+1}$ can be expressed, for example, as the following Formula. In the following formula, $f_{m+1}$ is the distance between each coordinate of the Pareto solutions obtained up to that point and the control point. "n" represents the number of times evolutionary computation has been performed (the current number of generations).

[Formula 1]

$$f_{m+1} = \sqrt{\left(c_{f1}(n) - f_1(\mathbf{x}_1)\right)^2 + \left(c_{f2}(n) - f_2(\mathbf{x}_1)\right)^2 \cdots + \left(c_{fm}(n) - f_m(\mathbf{x}_1)\right)^2}$$

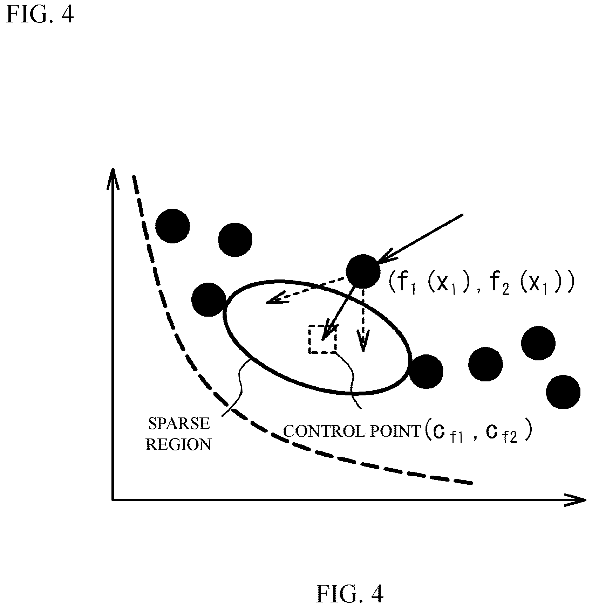

FIG. 4 illustrates a case where there are two evaluation functions. For a given solution $x_1$, coordinates ($f_1(x_1)$, $f_2(x_1)$) are set to control points ($c_{f1}$, $c_{f2}$) in the coarse region, and $f_{m+1}$ is reflected in the evaluation function used to search for a solution, thereby controlling the solution search direction. Controlling the solution search direction in this way allows the solution search direction to be dynamically changed. As a result, Pareto solutions with high uniformity can be obtained.

For example, the control points can be determined using the following procedure. First, Pareto solutions are extracted from the solutions obtained during the evolutionary computation. Next, the coordinates of the centers of gravity of m (the number of evaluation functions) random combinations of Pareto solutions are calculated. Next, each center of gravity is added to the Pareto solutions to determine the hypervolume (HV), and the center of gravity with the largest HV is detected as the control point. This is because the coordinates of the region with the coarsest solutions will result in the largest increase in HV when added to the Pareto solutions.

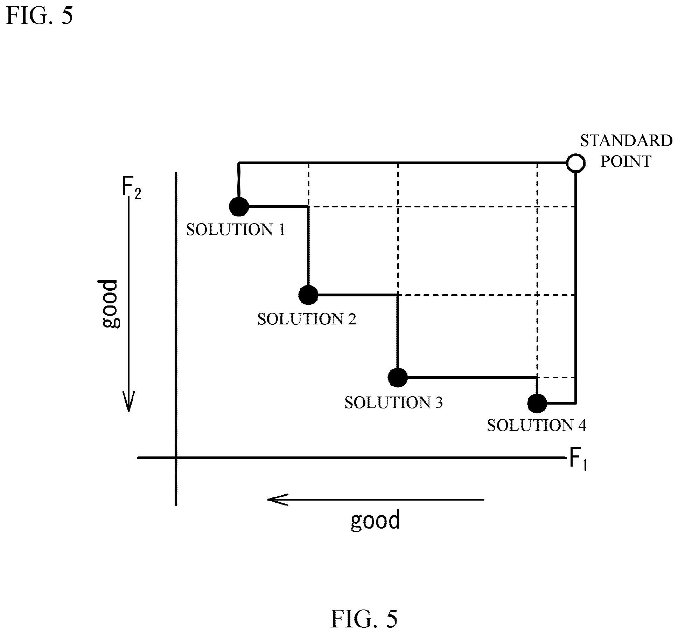

Here, HV will be descried. FIG. 5 is a diagram explaining HV. HV is a performance index of Pareto solutions.

Specifically, HV represents the area or volume of the region in the objective function space formed by a certain reference point and the solution set obtained by the algorithm. As an example, the reference point can be set to (0,0) and the standardized values of each objective function can be used. When there are two objective functions, the area illustrated in FIG. 5 is the HV. The larger this HV, the wider the range of solutions, and therefore, it can be determined that a good result has been obtained.

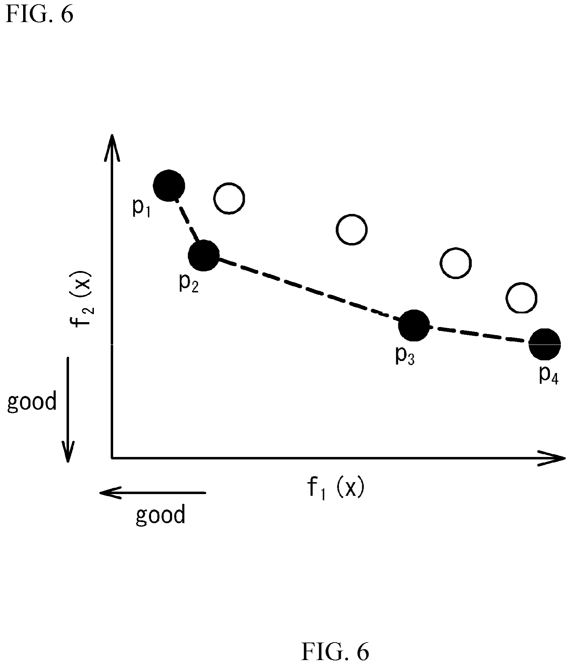

FIG. 6 is a diagram illustrating the results of a predetermined number of iterations of evolutionary computing. Assume that four Pareto solutions have been obtained by a predetermined number of iterations of evolutionary computing. The coordinates of each Pareto solution are $p_1$, $p_2$, $p_3$, and $p_4$. Calculate the center of gravity $c_{2,4}$ between $p_2$ and $p_4$, calculate the center of gravity $c_{1,2}$ between $p_1$ and $p_2$. The following centers of gravity are calculated in the same manner. Next, the HV is calculated from ($p_1$, $p_2$, ..., $p_4$, $c_{2,4}$), another HV is calculated from ($p_1$, $p_2$, ..., $p_4$, $c_{1,2}$). The following HVs are calculated in the same manner. The center of gravity $c$ where the HV is maximum is then detected as the control point.

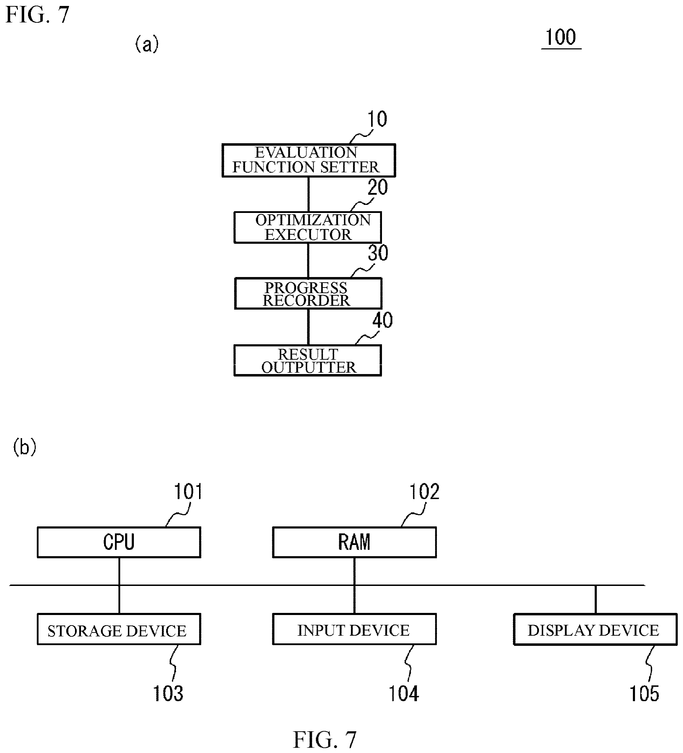

Next, the device configuration for realizing the above solution principle will be described. FIG. 7(a) is a functional block diagram of the overall configuration of an information processing device 100 according to the first embodiment. The information processing device 100 is, for example, a server for optimization processing. As illustrated in FIG. 7(a), the information processing device 100 functions as an evaluation function setter 10, an optimization executor 20, a progress recorder 30, a result outputter 40, and so on.

FIG. 7(b) is a block diagram illustrating the hardware configuration of the information processing device 100. As illustrated in FIG. 7(b), the information processing device 100 includes a CPU 101, a RAM 102, a storage device 103, an input device 104, a display device 105 and the like.

The CPU (Central Processing Unit) 101 is a central processing unit. The CPU 101 includes one or mode cores. The RAM (Random Access Memory) 102 is a volatile memory that temporarily stores programs executed by the CPU 101 and data processed by the CPU 101. The storage device 103 is a non-volatile storage device. For example, the storage device 103 may be a ROM (Read Only Memory), a solid state drive (SSD) such as a flash memory, or a hard disk driven by a hard disk drive. The storage device 103 stores a calculation program. The input device 104 is a device for the user to input necessary information, and is a keyboard, a mouse, or the like. The display device 105 is a display device for displaying results output by the result outputter 40 on a screen. The CPU 101 executes the calculation program, thereby realizing the functions of each unit of the information processing device 100. Note that the functions of each unit of the information processing device 100 may be configured using dedicated circuits or the like.

The evaluation function setter 10 sets multiple evaluation functions. The evaluation function setter 10 may set two evaluation functions, or three or more evaluation functions. In this embodiment, the evaluation function setter 10 sets evaluation functions $f_1$ to $f_m$ for m objective functions. The optimization executor 20 performs optimization so that the evaluation function f used to search for a solution is optimized. The progress recorder 30 records the results of the optimization performed by the optimization executor 20. The result outputter 40 outputs the results of the optimization performed by the optimization executor 20.

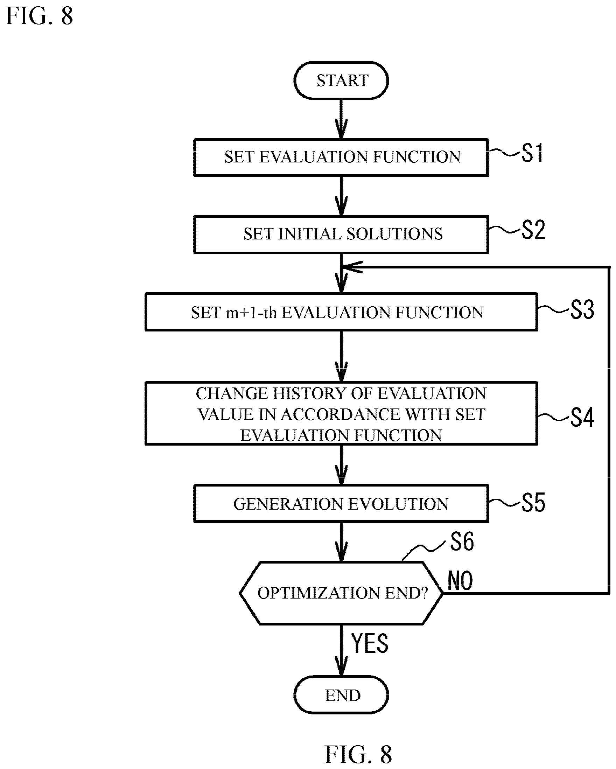

The optimization process will be described below with reference to the flowchart in FIG. 8. First, the evaluation function setter 10 sets m evaluation functions ($f_n$; n = 1 to m) from the m objective functions (Step S1). Each evaluation function represents, for example, the production completion time in the production process and the production cost. The shorter the production completion time, the better, and the lower the cost, the better.

Next, the optimization executor 20 sets the initial solution to a random value (Step S2). There are multiple initial solutions. The user may input the initial solution using the input device 104.

Next, the optimization executor 20 sets the (m+1)-th evaluation function $f_{m+1}$ (Step S3). Details of Step S3 will be described later.

Next, the optimization executor 20 changes the history of evaluation values recorded by the progress recorder 30 to match the set evaluation function (Step S4). Step S4 is executed for the following reason. The evaluation function f changes every time a control point is changed. Therefore, since the evaluation values prior to the (n-1)-th evolution, which are referenced when calculating the solution for the n-th evolution, are calculated using a different evaluation function from the n-th evolution, it is preferable to align the evaluation criteria. Therefore, by executing Step S4, the evaluation function f of the solutions of generations (n-1) and below is matched to the evaluation function f used in the n-th generation of evolutionary calculation.

Next, the optimization executor 20 performs generational evolution on the solutions obtained so far (step S5). During the first execution of step S5, the initial solution is subjected to generational evolution. During the second and subsequent executions of step S5, the group of solutions that have not yet been selected are the evolution targets.

Next, the optimization executor 20 determines whether the optimization has ended (step S6). For example, it determines whether the number of generational evolutions has reached a predetermined number. If the determination in step S6 is "No," execution begins again from step S3. If the determination in step S6 is "Yes," execution of the flowchart ends.

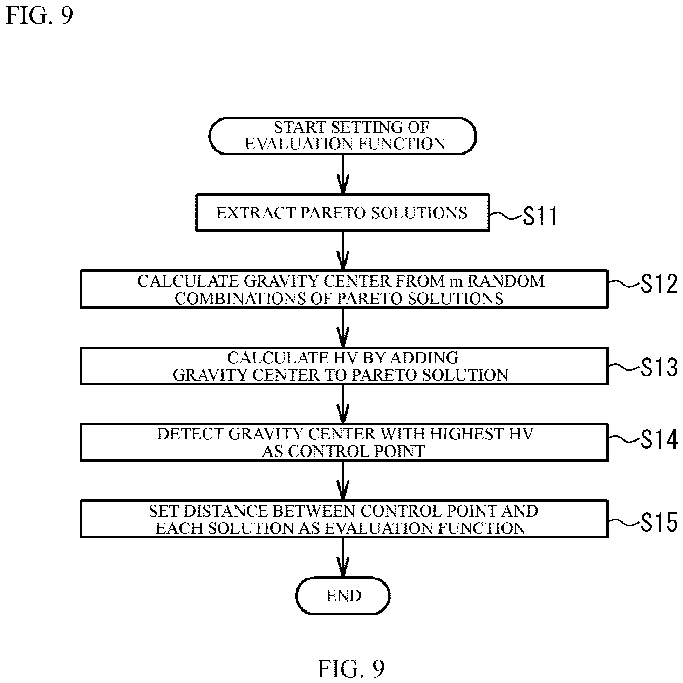

FIG. 9 is a flowchart of the details of step S3. As illustrated in FIG. 9, the optimization executor 20 extracts Pareto solutions (step S11). During the first execution of step S11, Pareto solutions are extracted from the initial solutions. When step S11 is executed for the second time or later, Pareto solutions are extracted from the solutions obtained up to that point.

Next, the optimization executor 20 calculates the center of gravity for m random combinations of the coordinates of the Pareto solutions extracted in step S11 (step S12).

Next, the optimization executor 20 adds the center of gravity to each coordinate of the Pareto solutions to calculate HV (step S13).

Next, the optimization executor 20 detects the center of gravity where HV is maximized as the control point (step S14).

Next, the optimization executor 20 reflects the distance $f_{m+1}$ between the control point and each coordinate of the Pareto solution in the evaluation function f (step S15). Through the above process, the (m+1)-th evaluation function can be set.

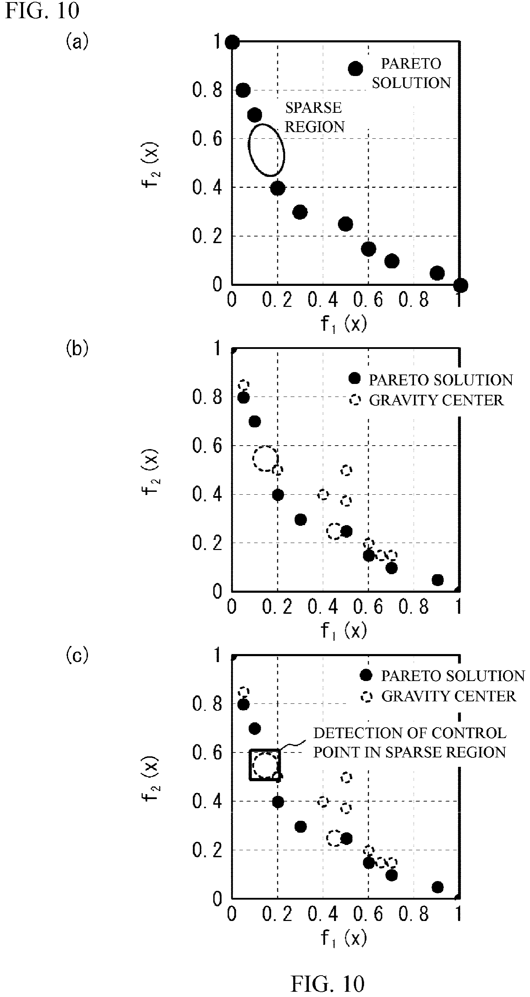

FIG. 10(a) to FIG. 10(c) are diagrams illustrating the detection of regions where the solution distribution is sparse when there are two evaluation functions. As illustrated in FIG. 10(a), assume that 10 Pareto solutions have been obtained. In this case, sparse regions have occurred. Next, as illustrated in FIG. 10(b), the center of gravity coordinates for random combinations (10 pairs) of the coordinates of the Pareto solutions are calculated. Next, as illustrated in FIG. 10(c), the center of gravity coordinates where HV is maximized can be detected as the control point.

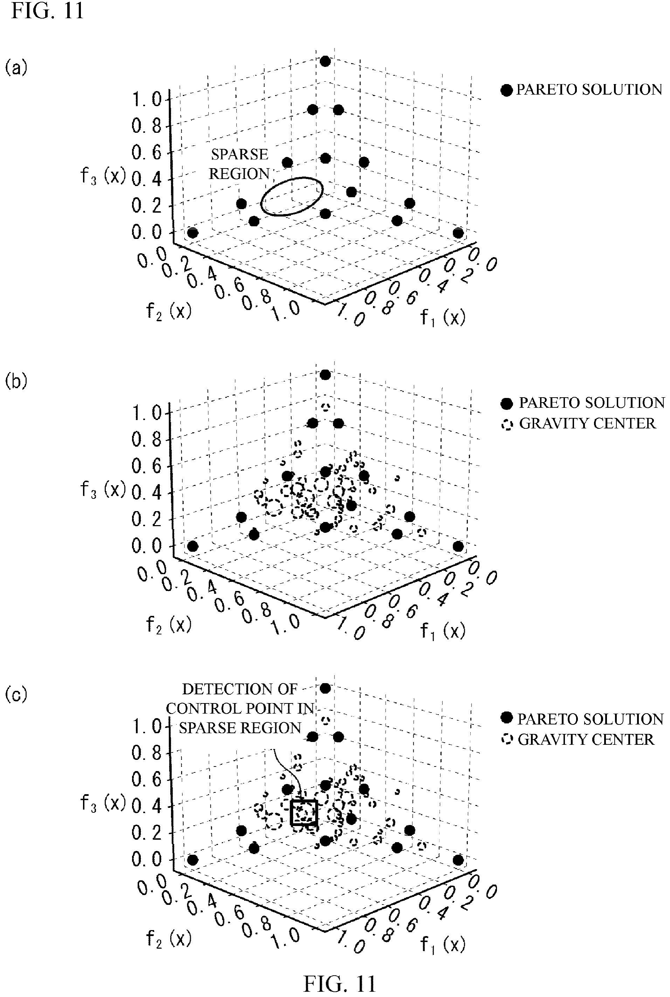

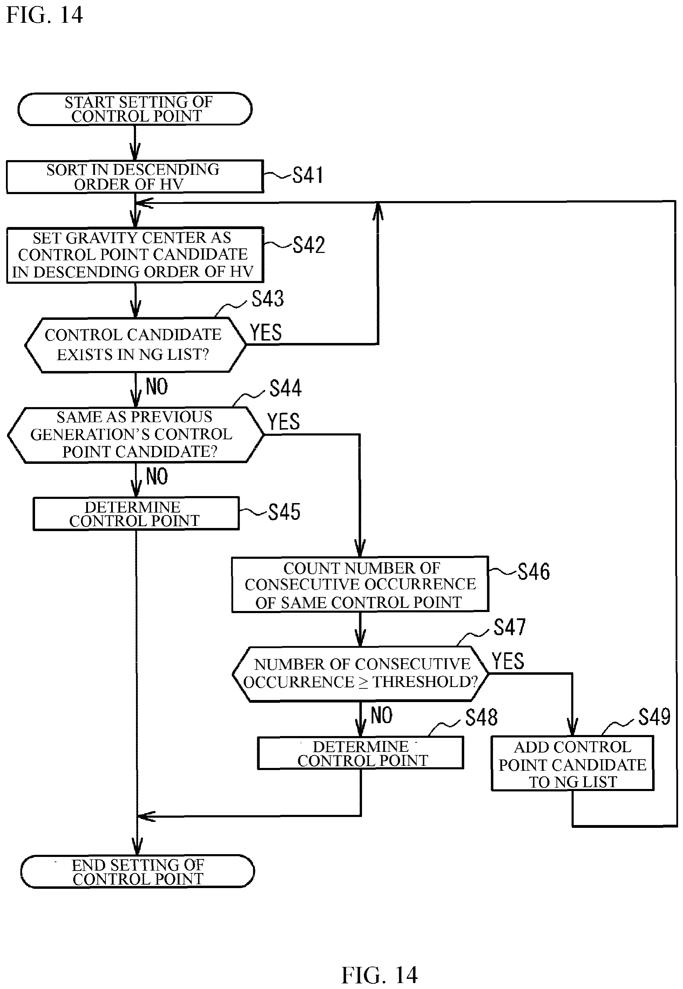

FIG. 11(a) to FIG. 11(c) illustrate the detection of regions where the solution distribution is sparse when there are three evaluation functions. As illustrated in FIG. 11(a), 14 Pareto solutions have been obtained. In this case, sparse regions have been identified. Next, as illustrated in FIG. 11(b), the coordinates of centers of gravity of random combinations (50 pairs) of the coordinates of the Pareto solutions are calculated. Next, as illustrated in FIG. 11(c), the coordinates of centers of gravity with the highest HV can be detected as the control point.

According to this embodiment, when the process of searching for solutions by evolving them using evolutionary computing to improve the evaluation function f, which evaluates multiple objective functions, is repeated, the search direction for solutions is controlled according to the distribution of the obtained Pareto solutions, and the next generation of solutions is searched for. This allows the search direction for solutions to be dynamically changed, resulting in highly uniform Pareto solutions.

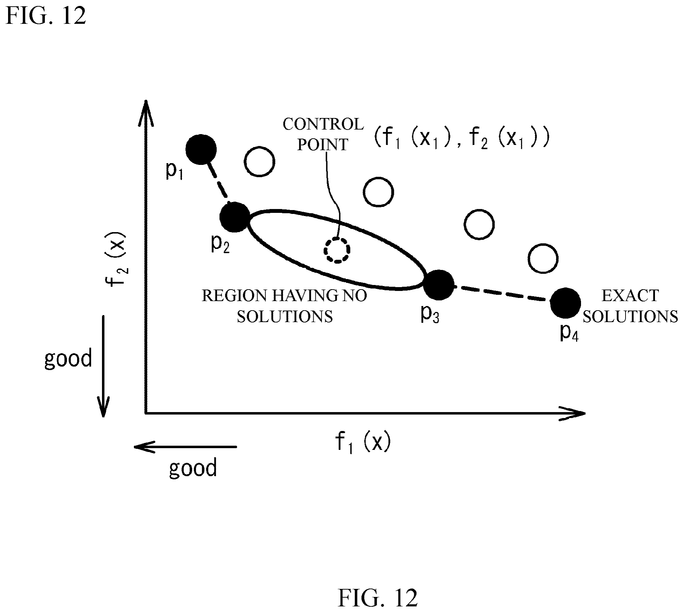

As illustrated in FIG. 12, there may be wide gaps in the distribution of exact solutions that should be obtained. In this case, even if the search direction for a solution points toward the wide gap, unnecessary calculations will occur. Therefore, it is preferable to eliminate unnecessary calculations by excluding the wide gaps from the search range. For example, if a control point is detected within the same region a certain number of times in succession, it is preferable to determine that no solution exists in that region and to perform processing that prevents the region from being adopted as a control point thereafter.

For example, the centers of gravity are sorted in descending order of HV and set as control point candidates (1). Next, the center of gravity with the highest HV is selected as a control point candidate and checked to ensure that it does not exist in the control point NG list and that no control points in the same region (for example, a region within ±3% of the control point candidate) have appeared more than a certain number of times (hereinafter referred to as the control point condition) (2). If condition (2) is met, the control point is adopted, the control point is stored, and the process ends (3). Next, if the same control point appears a certain number of times in a row and does not satisfy the conditions, the coordinates are registered in the NG list (4). Coordinates registered in the NG list are not used as control points. Next, the center of gravity with the next largest HV is selected as the control point candidate and the adoption conditions are determined (5). The determination result is then obtained and the process returns to (3).

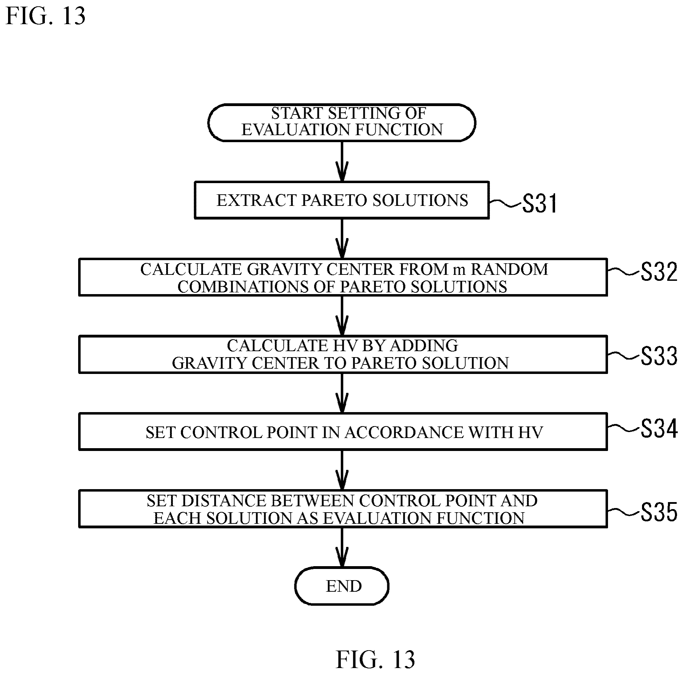

FIG. 13 is a flowchart for step S3, which considers the case where a wide gap exists in the distribution of exact solutions that should have been obtained. As illustrated in FIG. 13, the optimization executor 20 extracts Pareto solutions (step S31). When step S31 is executed the first time, Pareto solutions are extracted from the initial solutions. When step S31 is executed the second time or later, Pareto solutions are extracted from the solutions obtained up to that point.

Next, the optimization executor 20 calculates the center of gravity using m random combinations of the coordinates of the Pareto solutions extracted in step S31 (step S32).

Next, the optimization executor 20 adds the center of gravity to each coordinate of the Pareto solution to calculate HV (step S33).

Next, the optimization executor 20 sets control points based on the HVs (Step S34).

Next, the optimization executor 20 reflects the distances between the control points and each coordinate of the Pareto solutions in the evaluation function f (Step S35). Through the above processing, the (m+1)-th evaluation function $f_{m+1}$ can be reflected in the evaluation function f.

FIG. 14 is a flowchart of the details of Step S34. As illustrated in FIG. 14, the optimization executor 20 sorts the results in descending order of HV (Step S41).

Next, the optimization executor 20 sets the centers of gravity as control point candidates in descending order of HV (Step S42).

Next, the optimization executor 20 determines whether the control point candidates are on the NG list (Step S43). If the determination in Step S43 is "Yes," processing resumes from Step S42. Therefore, the coordinates registered in the NG list will not be set as control points.

If step S43 returns "No," the optimization executor 20 determines whether the control point candidate is the same as the previous generation's control point candidate (step S44).

If step S44 returns "No," the optimization executor 20 determines the control point candidate as the control point (step S45). Execution of the flowchart then ends.

If step S44 returns "Yes," the optimization executor 20 counts the number of consecutive occurrences of the same control point (step S46).

Next, the optimization executor 20 determines whether the number of consecutive occurrences counted in step S46 is equal to or greater than a threshold (step S47).

If step S47 returns "No," the optimization executor 20 determines the control point candidate as the control point (step S48). Execution of the flowchart then ends.

If step S47 returns "Yes," the optimization executor 20 adds the control point candidate to the NG list (step S49). Then, execution resumes from step S42.

Here, a simulation was performed to search for a solution to a standard problem using the method of this embodiment. Let $F(x) = (f_1(x_1), f_2(x))$. Let $f_1(x_1) = x_1$. $f_2(x)$ can be expressed as the following formulas. Note that $m = 30$ and $x_i \in [0,1]$.

[Formula 2]

$$f_2(\mathbf{x}) = g(x_2, \cdots, x_m)\left[1 - \sqrt{x_1/g(x_2, \cdots, x_m)}\right]$$

[Formula 3]

$$g(x_2, \cdots, x_m) = 1 + 9\left(\sum_{i=2}^{m} x_i\right)/(m-1)$$

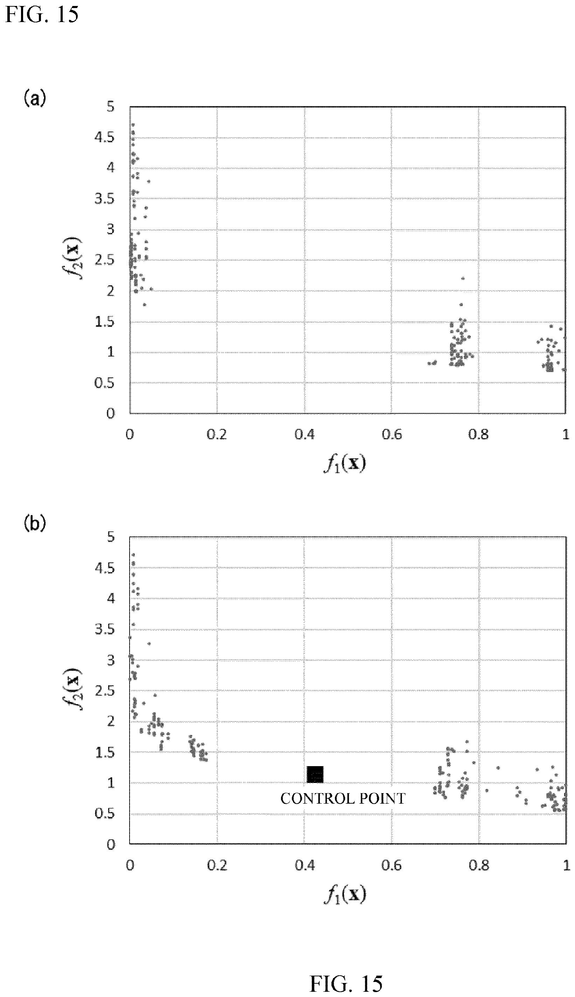

FIG. 15(a) and FIG. 15(b) illustrate a comparison of the search process for Pareto solutions. In both FIG. 15(a) and FIG. 15(b), the number of generations was 240. FIG. 15(a) illustrates the results of a solution search without setting control points. FIG. 15(b) illustrates the results of a solution search with control points set. Compared to FIG. 15(a), FIG. 15(b) illustrates that the distribution of solutions has been smoothed out and is more uniform.

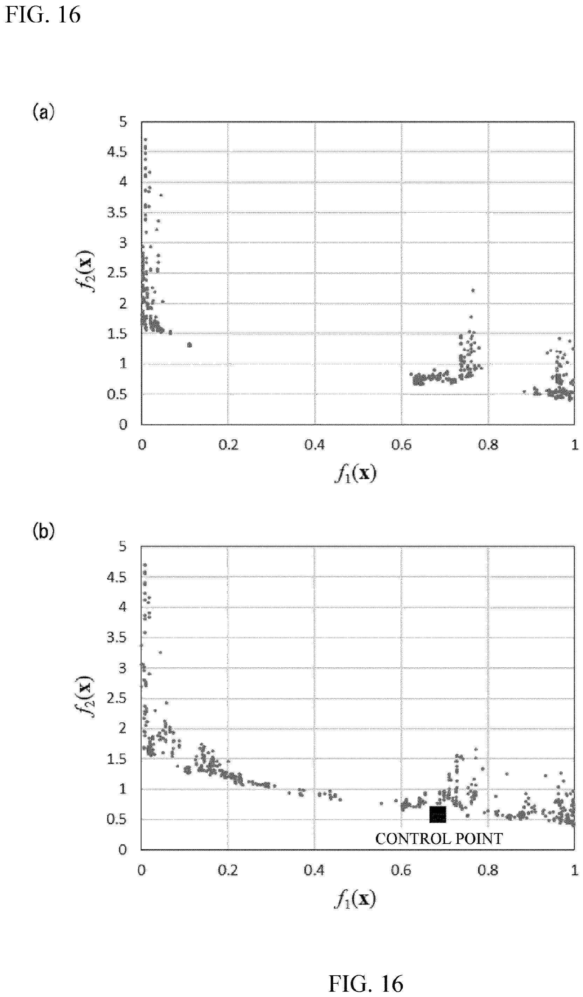

FIG. 16(a) and FIG. 16(b) illustrate a comparison of the search process for Pareto solutions. The number of generations was set to 720. FIG. 16(a) illustrates the results of a solution search without setting control points. FIG. 16(b) illustrates the results of a solution search with control points set. Compared to FIG. 16(a), FIG. 16(b) illustrates that the distribution of solutions has been smoothed out and is more uniform.

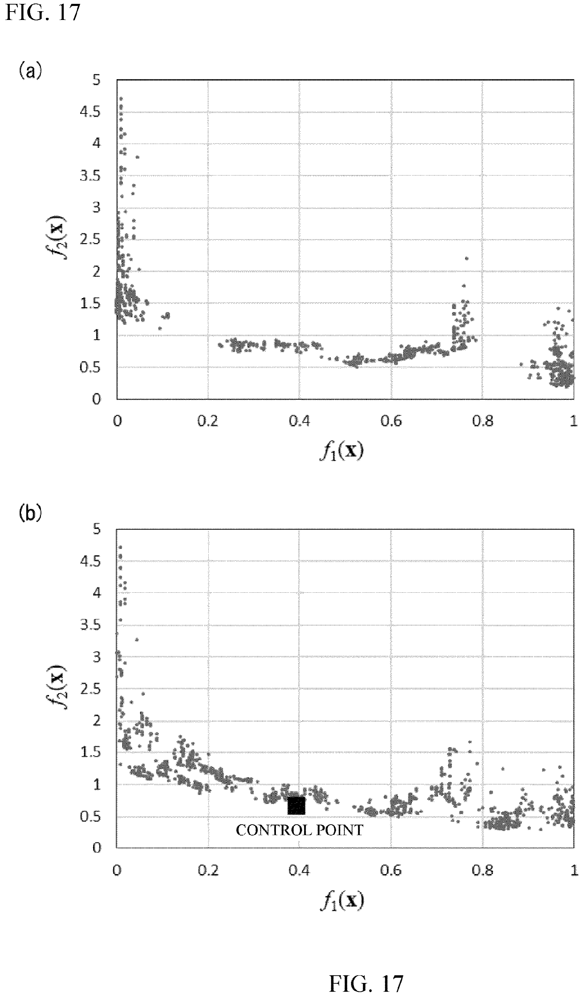

FIG. 17(a) and FIG. 17(b) illustrate a comparison of the search process for Pareto solutions. The number of generations was set to 1440. FIG. 17(a) illustrates the results of a solution search without setting control points. FIG. 17(b) illustrates the results of a solution search with control points set. Compared to FIG. 17(a), the deviation in the distribution of solutions is eliminated in FIG. 17(b), resulting in higher uniformity.

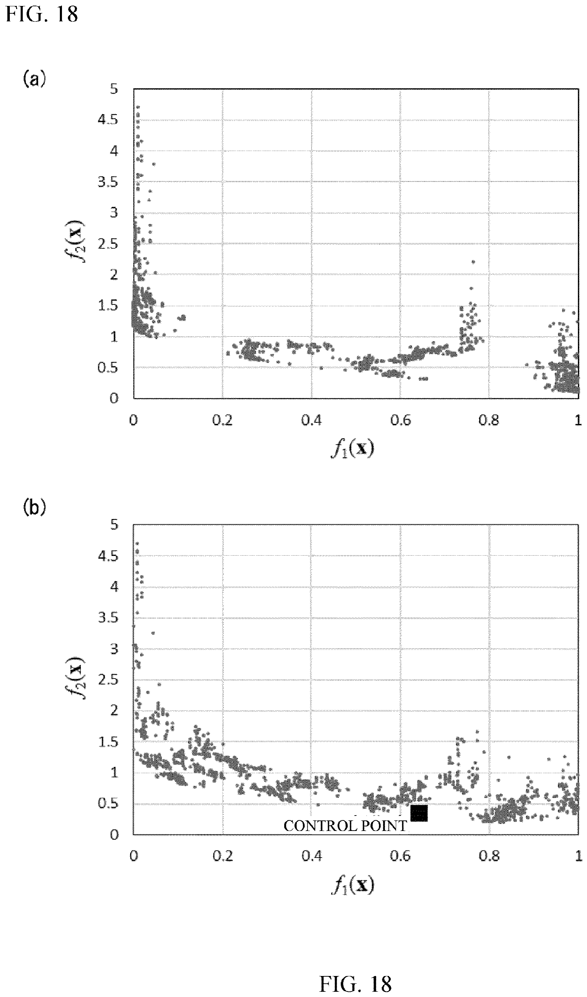

FIG. 18(a) and FIG. 18(b) illustrate a comparison of the search process for Pareto solutions. The number of generations was 2040. FIG. 18(a) illustrates the results of searching for solutions without setting control points. FIG. 18(b) illustrates the results of searching for solutions with control points set. Compared to FIG. 18(a), FIG. 18(b) illustrates that the distribution of solutions has been eliminated and is more uniform.

For example, CR (Cover Rate) can be used as an evaluation index for the uniformity of Pareto solutions. CR represents the proportion of solutions found within the divided regions obtained by dividing the area between the maximum and minimum values of the Pareto solutions for each objective function. The higher the CR, the more uniform the Pareto solutions obtained. The CR in FIG. 18(b) was 25% higher than the CR in FIG. 18(a).

Next, we performed a simulation to search for a solution to a standard problem when there are large gaps in the distribution of exact solutions. Let $F(x) = (f_1(x_1), f_2(x))$. Let $f_1(x_1) = x_1$. $f_2(x)$ can be expressed as follows. Note that $N = 3$ and $x_i \in [-5, 5]$.

[Formula 4]

$$f_1(\mathbf{x}) = \sum_{n=1}^{N-1} \left( -10\exp\left( -0.2\sqrt{x_n^2 + x_{n+1}^2} \right) \right)$$

[Formula 5]

$$f_2(\mathbf{x}) = \sum_{n=1}^{N} \left( |x_n|^{0.8} + 5\sin(x_n)^3 \right)$$

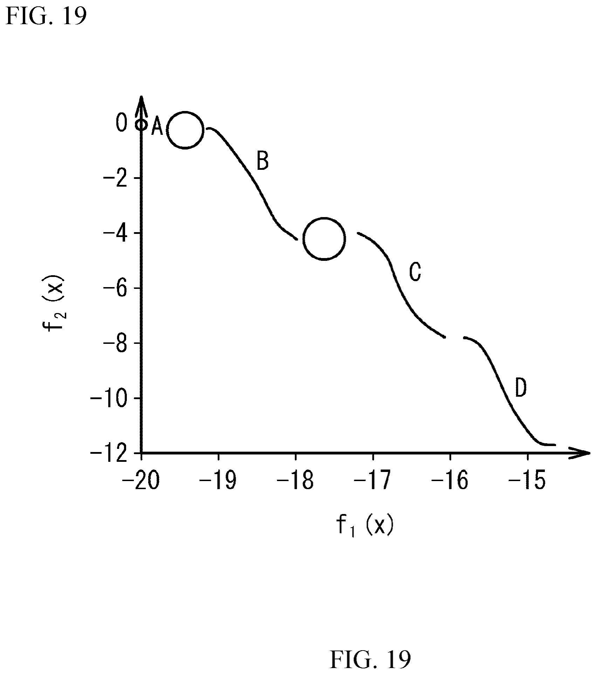

FIG. 19 illustrates the exact solution to this standard problem. As illustrated in FIG. 19, there are large gaps in the distribution of exact solutions.

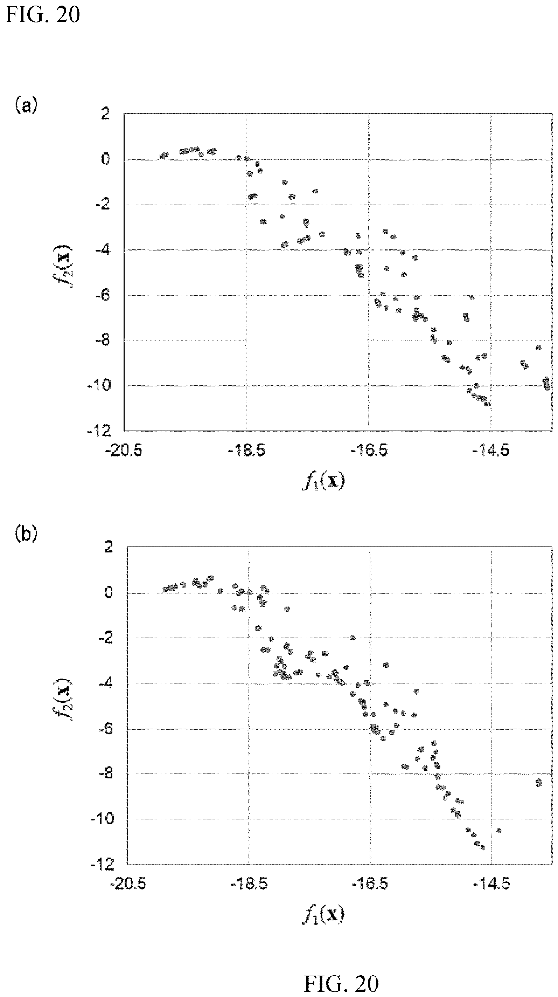

FIG. 20(a) and FIG. 20(b) illustrate a comparison of the search process for Pareto solutions. In both FIG. 20(a) and FIG. 20(b), the number of generations was 760. FIG. 20(a) illustrates the results of a solution search without setting control points. FIG. 20(b) illustrates the results of setting control points and searching for a solution. Compared to FIG. 20(a), FIG. 20(b) illustrates that the distribution of solutions has been improved and is more uniform.

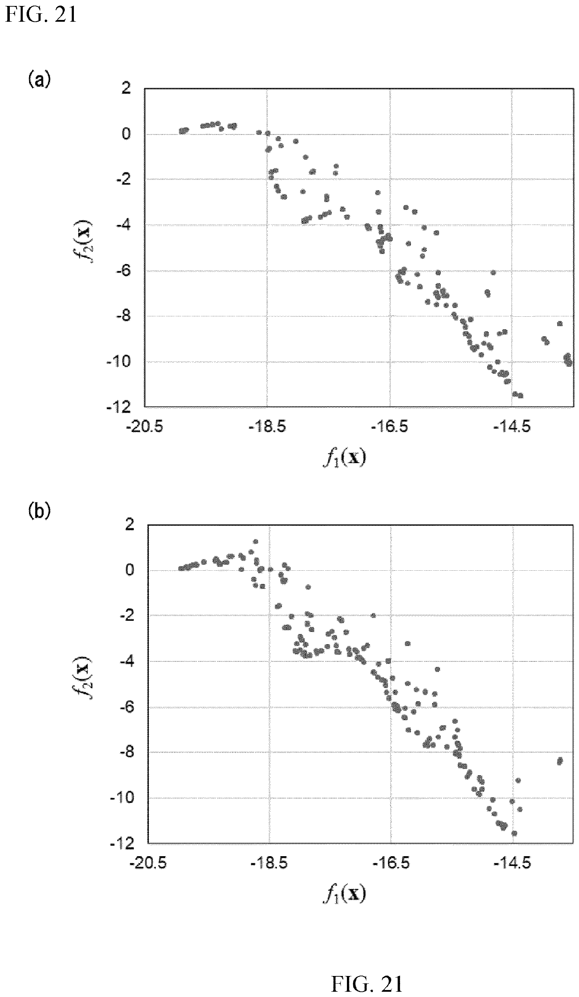

FIG. 21(a) and FIG. 21(b) illustrate a comparison of the search process for Pareto solutions. The number of generations was set to 1000. FIG. 21(a) illustrates the result of searching for solutions without setting control points. FIG. 21(b) illustrates the result of searching for solutions with control points set. Compared to FIG. 21(a), the bias in the solution distribution in FIG. 21(b) has been eliminated, resulting in higher uniformity.

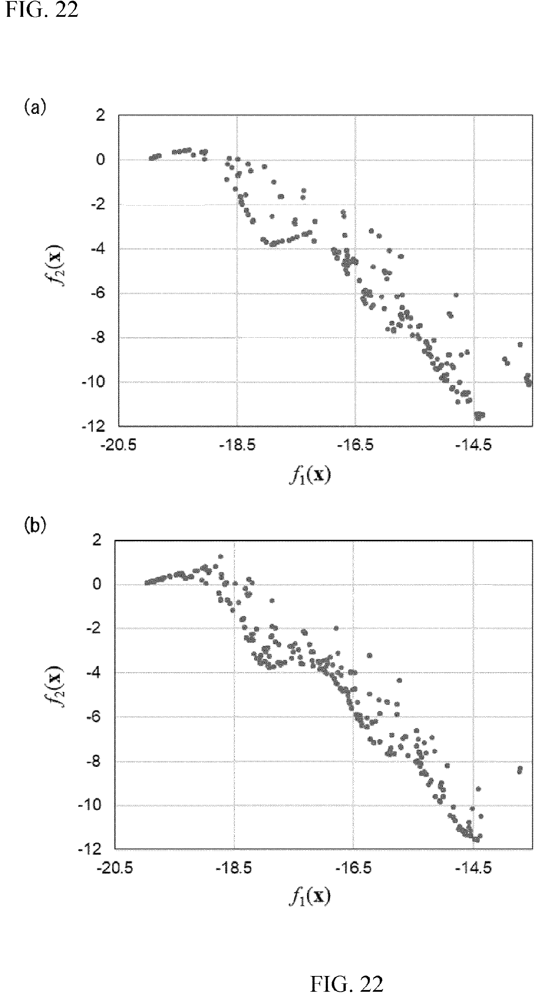

FIG. 22(a) and FIG. 22(b) illustrate a comparison of the search process for Pareto solutions. The number of generations was set to 1370. FIG. 22(a) illustrates the result of searching for solutions without setting control points. FIG. 22(b) illustrates the result of searching for solutions with control points set. Compared to FIG. 22(a), the bias in the solution distribution in FIG. 22(b) has been eliminated, resulting in higher uniformity.

The CR in FIG. 22(b) was 18% higher than the CR in FIG. 22(a).

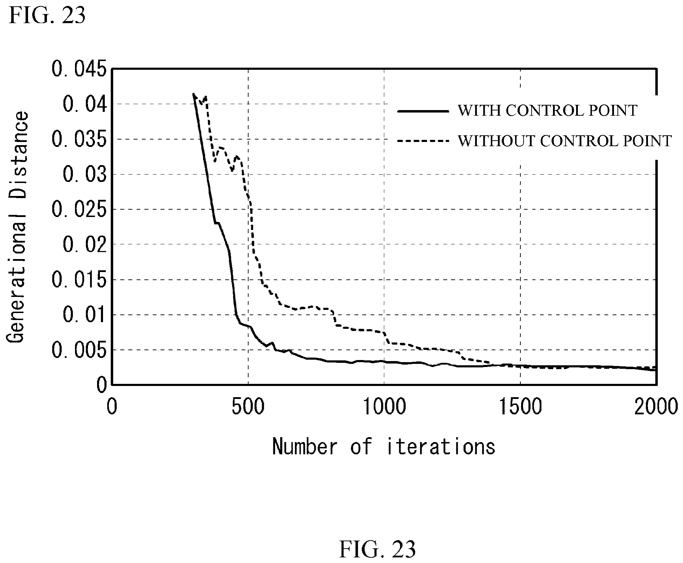

FIG. 23 illustrates the relationship between the number of generations and GD (Generational Distance). GD represents the average distance between each Pareto solution and the exact solution. The smaller the GD, the higher the convergence to the exact solution. As illustrated in FIG. 23, when a control point was set, the GD was reduced by more than 99% from the initial value by the 1,370th generation evolution, indicating that all convergence occurred by the 1,370th generation evolution.

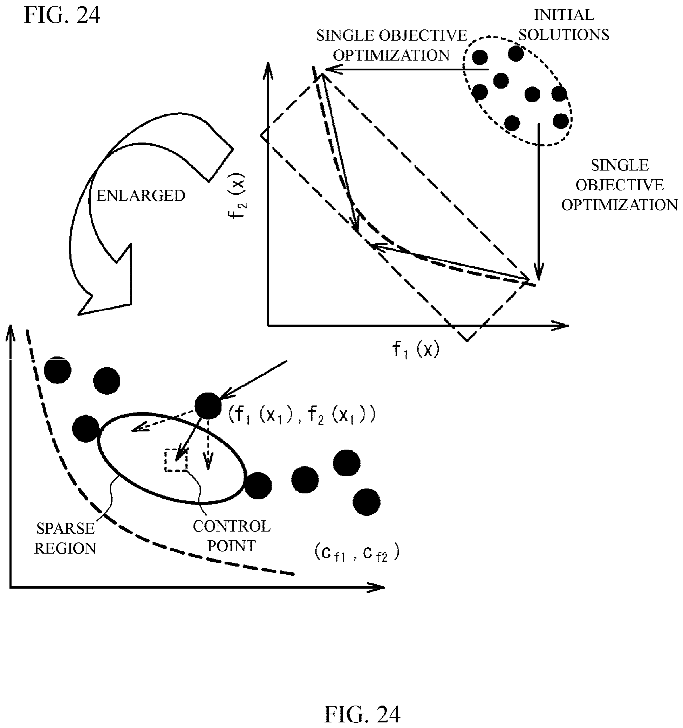

Note that in the above example, multi-objective optimization was performed from an initial solution group, but this is not limited to this. For example, single-objective optimization may be performed for an initial solution using each of a plurality of objective functions as an evaluation function to calculate a single-objective optimal solution that is better than the initial solution, and multi-objective optimization may be performed using the calculated single-objective optimal solution (Pareto solution) as a starting point. For example, as illustrated in FIG. 24, multi-objective optimization may be performed to set the control points using the Pareto solutions obtained by single-objective optimization of m objective functions $f_i(x)$ (i = 1, ..., m) as a starting point. In this case, the Pareto solutions are approached by single-objective optimization with a small amount of calculation, and then multi-objective optimization is performed, thereby reducing the amount of calculation required to reach the Pareto solutions.

Note that while a genetic algorithm was used for evolutionary computation in the above examples, other types of evolutionary computation may also be used.

In each of the above examples, the optimization executor 20 is an example of an executor that, when repeating the process of searching for a solution using evolutionary computation based on an evaluation function that evaluates multiple objective functions, controls the solution search direction in accordance with the distribution of the obtained Pareto solutions and executes the process of searching for a next-generation solution.

The above-described embodiment is a preferred example of the present invention. However, the present disclosure is not limited to this, and various modifications can be made without departing from the scope of the present invention. Description of Symbols

10   Objective function setter

| 20 | Optimization executor |
|---|---|
| 30 | Progress recorder |
| 40 | Result outputter |
| 100 | Information processing device |
| 101 | CPU |
| 102 | RAM |
| 103 | Storage device |
| 104 | Input device |
| 105 | Display device |

**Claims**

1. A calculation program **characterized by** causing a computer to execute a process including:
   when repeatedly searching for a solution using evolutionary computation based on an evaluation function that evaluates multiple objective functions, controlling a search direction for the solution according to a distribution of Pareto solutions obtained, and searching for a next generation of solutions.

2. The calculation program as claimed in claim 1, **characterized by** causing the computer to execute, when controlling the search direction for the solution, setting a control point according to a density of the distribution of the Pareto solutions, and reflecting the control point in the search direction for the solution.

3. The calculation program as claimed in claim 2, **characterized by** causing the computer to execute detecting a sparse region in the distribution of the Pareto solutions, and setting the control point within the sparse region.

4. The calculation program as claimed in claim 3, **characterized by** causing the computer to execute calculating coordinates of centers of gravity of combinations of coordinates of the Pareto solutions, adding each of the centers of gravity to each of the Pareto solutions to obtain a hypervolume, and detecting a center of gravity at which the hypervolume is maximized as the control point.

5. The calculation program as claimed in claim 2, **characterized in that** the direction of search for the solution is controlled by reflecting each distance between the control point and each of the coordinates of the Pareto solutions in the evaluation function.

6. The calculation program as claimed in claim 2, **characterized by** causing the computer to execute, when the control point is set multiple times, determining whether the control point falls within a specified range a specified number of times in succession, and eliminating the control point from the specified range if it is determined that the control point falls within the specified range.

7. The calculation program as claimed in claim 1, **characterized in that** the evaluation function for solutions of a (n-1)-th generation or later is adjusted to the evaluation function for an n-th generation of evolutionary calculation.

8. The calculation program as claimed in claim 1, **characterized by** causing the computer to execute, for initial solutions, performing single-objective optimization by using each of the multiple objective functions as an evaluation function to calculate a single-objective optimal solution that has a better value than the initial solutions, and evolving calculated single-objective optimal solution by using the evolutionary computation.

9. A calculation method **characterized in that** a computer executes a process including:
   when repeatedly searching for a solution using evolutionary computation based on an evaluation function that evaluates multiple objective functions, controlling a search direction for the solution according to a distribution of Pareto solutions obtained, and searching for a next generation of solutions.

10. The calculation method as claimed in claim 9, **characterized in that** the computer executes, when controlling the search direction for the solution, setting a control point according to a density of the distribution of the Pareto solutions, and reflecting the control point in the search direction for the solution.

11. The calculation method as claimed in claim 10, **characterized in that** the computer executes detecting a sparse region in the distribution of the Pareto solutions, and setting the control point within the sparse region.

12. The calculation method as claimed in claim 11, **characterized in that** the computer executes calculating coordinates of centers of gravity of combinations of coordinates of the Pareto solutions, adding each of the centers of gravity to each of the Pareto solutions to obtain a hypervolume, and detecting a center of gravity at which the hypervolume is maximized as the control point.

13. The calculation method as claimed in claim 10, **characterized in that** the direction of search for the solution is controlled by reflecting each distance between the control point and each of the coordinates of the Pareto solutions in the evaluation function.

14. The calculation method as claimed in claim 10, **characterized in that** the computer executes, when the control point is set multiple times, determining whether the control point falls within a specified range a specified number of times in succession, and eliminating the control point from the specified range if it is determined that the control point falls within the specified range.

15. The calculation method as claimed in claim 9, **characterized in that** the evaluation function for solutions of a (n-1)-th generation or later is adjusted to the evaluation function for an n-th generation of evolutionary calculation.

16. The calculation method as claimed in claim 9, **characterized in that** the computer executes, for initial solutions, performing single-objective optimization by using each of the multiple objective functions as an evaluation function to calculate a single-objective optimal solution that has a better value than the initial solutions, and evolving calculated single-objective optimal solution by using the evolutionary computation.

17. An information processing device **characterized by** comprising:
an executor configured to, when repeatedly searching for a solution using evolutionary computation based on an evaluation function that evaluates multiple objective functions, control a search direction for the solution according to a distribution of Pareto solutions obtained, and searching for a next generation of solutions.

18. The information processing device as claimed in claim 17, **characterized in that**
when controlling the search direction for the solution, the executor sets a control point according to a density of the distribution of the Pareto solutions, and reflects the control point in the search direction for the solution.

19. The information processing device as claimed in claim 18, **characterized in that** the executor detects a sparse region in the distribution of the Pareto solutions, and sets the control point within the sparse region.

20. The information processing device as claimed in claim 19, **characterized in that** the executor calculates coordinates of centers of gravity of combinations of coordinates of the Pareto solutions, adds each of the centers of gravity to each of the Pareto solutions to obtain a hypervolume, and detects a center of gravity at which the hypervolume is maximized as the control point.

21. The information processing device claimed in claim 18, **characterized in that** the executor controls the direction of search for the solution by reflecting each distance between the control point and each of the coordinates of the Pareto solutions in the evaluation function.

22. The information processing device as claimed in claim 18, **characterized in that** when the control point is set multiple times, the executor determines whether the control point falls within a specified range a specified number of times in succession, and eliminates the control point from the specified range if it is determined that the control point falls within the specified range.

23. The information processing device as claimed in claim 17, **characterized in that** the executor adjusts the evaluation function for solutions of a (n-1)-th generation or later to the evaluation function for an n-th generation of evolutionary calculation.

24. The information processing device as claimed in claim 17, **characterized in that** the executor, for initial solutions, performs single-objective optimization by using each of the multiple objective functions as an evaluation function to calculate a single-objective optimal solution that has a better value than the initial solutions, and evolves calculated single-objective optimal solution by using the evolutionary computation.

FIG. 1

FIG. 1

FIG. 2

FIG. 2

FIG. 3

```
        ┌─────────────┐
        │    START    │
        └──────┬──────┘
               ▼
    ┌──────────────────────┐
    │ GENERATE INITIAL     │
    │ POPULATION           │
    └──────────┬───────────┘
               ▼
    ┌──────────────────────┐
    │ SELECT PARENT        │
    │ INDIVIDUALS FROM     │
    │ POPULATION           │
    └──────────┬───────────┘
               ▼
    ┌──────────────────────┐
    │ GENERATE OFFSPRING   │
    │ INDIVIDUALS THROUGH  │
    │ CROSSOVER            │
    └──────────┬───────────┘
               ▼
    ┌──────────────────────┐
    │ MUTATION             │
    └──────────┬───────────┘
               ▼
    ┌──────────────────────┐
    │ EVALUATION           │
    └──────────┬───────────┘
               ▼
    ┌──────────────────────┐
    │ SELECTION            │
    └──────────┬───────────┘
               ▼
   No  ◇ GENERATION           ◇
   ◄───  NUMBER IS LIMIT?
               │ Yes
               ▼
        ┌─────────────┐
        │    END      │
        └─────────────┘
```

FIG. 3

FIG. 4

FIG. 4

FIG. 5

FIG. 5

FIG. 6

FIG. 6

FIG. 7

(a)

100

10

EVALUATION
FUNCTION SETTER

20

OPTIMIZATION
EXECUTOR

30

PROGRESS
RECORDER

40

RESULT
OUTPUTTER

(b)

101

CPU

102

RAM

STORAGE DEVICE

INPUT DEVICE

DISPLAY DEVICE

103

104

105

FIG. 7

FIG. 8

FIG. 8

FIG. 9

```
            ┌─────────────────────────────┐
            │      START SETTING OF       │
            │    EVALUATION FUNCTION      │
            └─────────────────────────────┘
                          │
                          ▼
        ┌─────────────────────────────────┐
        │   EXTRACT PARETO SOLUTIONS      │───S11
        └─────────────────────────────────┘
                          │
                          ▼
   ┌───────────────────────────────────────────┐
   │  CALCULATE GRAVITY CENTER FROM m RANDOM   │───S12
   │     COMBINATIONS OF PARETO SOLUTIONS      │
   └───────────────────────────────────────────┘
                          │
                          ▼
   ┌───────────────────────────────────────────┐
   │         CALCULATE HV BY ADDING            │───S13
   │    GRAVITY CENTER TO PARETO SOLUTION      │
   └───────────────────────────────────────────┘
                          │
                          ▼
   ┌───────────────────────────────────────────┐
   │   DETECT GRAVITY CENTER WITH HIGHEST HV   │───S14
   │            AS CONTROL POINT               │
   └───────────────────────────────────────────┘
                          │
                          ▼
   ┌───────────────────────────────────────────┐
   │  SET DISTANCE BETWEEN CONTROL POINT AND   │───S15
   │   EACH SOLUTION AS EVALUATION FUNCTION    │
   └───────────────────────────────────────────┘
                          │
                          ▼
                    ┌───────────┐
                    │    END    │
                    └───────────┘
```

FIG. 9

FIG. 10

(a)

(b)

(c)

FIG. 10

FIG. 11

(a)

● PARETO SOLUTION

(b)

● PARETO SOLUTION
○ GRAVITY CENTER

(c)

● PARETO SOLUTION
○ GRAVITY CENTER

FIG. 11

FIG. 12

FIG. 12

FIG. 13

```
        ┌─────────────────────────────┐
        │      START SETTING OF       │
        │    EVALUATION FUNCTION      │
        └─────────────┬───────────────┘
                      ▼
        ┌─────────────────────────────┐
        │   EXTRACT PARETO SOLUTIONS  │──── S31
        └─────────────┬───────────────┘
                      ▼
  ┌─────────────────────────────────────────┐
  │  CALCULATE GRAVITY CENTER FROM m RANDOM  │──── S32
  │   COMBINATIONS OF PARETO SOLUTIONS       │
  └─────────────────────┬───────────────────┘
                        ▼
  ┌─────────────────────────────────────────┐
  │        CALCULATE HV BY ADDING            │──── S33
  │   GRAVITY CENTER TO PARETO SOLUTION      │
  └─────────────────────┬───────────────────┘
                        ▼
  ┌─────────────────────────────────────────┐
  │  SET CONTROL POINT IN ACCORDANCE WITH HV │──── S34
  └─────────────────────┬───────────────────┘
                        ▼
  ┌─────────────────────────────────────────┐
  │  SET DISTANCE BETWEEN CONTROL POINT AND  │──── S35
  │  EACH SOLUTION AS EVALUATION FUNCTION    │
  └─────────────────────┬───────────────────┘
                        ▼
                 ┌─────────────┐
                 │     END     │
                 └─────────────┘
```

FIG. 13

FIG. 14

```
        START SETTING OF
         CONTROL POINT

       SORT IN DESCENDING          S41
         ORDER OF HV

       SET GRAVITY CENTER AS       S42
     CONTROL POINT CANDIDATE
     IN DESCENDING ORDER OF HV

                                   S43
        CONTROL CANDIDATE         YES
         EXISTS IN NG LIST?

              NO                   S44
       SAME AS PREVIOUS           YES
     GENERATION'S CONTROL
       POINT CANDIDATE?

              NO
          DETERMINE               S45
        CONTROL POINT

                                            COUNT NUMBER OF           S46
                                        CONSECUTIVE OCCURRENCE
                                         OF SAME CONTROL POINT

                                                                      S47
                                        NUMBER OF CONSECUTIVE       YES
                                       OCCURRENCE ≥ THRESHOLD?

                                              NO     S48                    S49
                                          DETERMINE                 ADD CONTROL
                                        CONTROL POINT              POINT CANDIDATE
                                                                     TO NG LIST

         END SETTING OF
          CONTROL POINT
```

FIG. 14

FIG. 15

(a)

(b)

FIG. 15

FIG. 16

(a)

(b)

FIG. 16

FIG. 17

(a)

(b)

CONTROL POINT

FIG. 17

FIG. 18

(a)

(b)

FIG. 18

FIG. 19

FIG. 19

FIG. 20

(a)

(b)

FIG. 20

FIG. 21

(a)

(b)

FIG. 21

FIG. 22

FIG. 22

FIG. 23

FIG. 23

FIG. 24

FIG. 24

## INTERNATIONAL SEARCH REPORT

| International application No. |
| --- |
| **PCT/JP2023/012942** |

| A. | CLASSIFICATION OF SUBJECT MATTER |
| --- | --- |

*G06N 3/126*(2023.01)i; *G06N 99/00*(2019.01)i
FI:　G06N3/126; G06N99/00 180

According to International Patent Classification (IPC) or to both national classification and IPC

| B. | FIELDS SEARCHED |
| --- | --- |

Minimum documentation searched (classification system followed by classification symbols)

　　G06N3/12-3/126; G06N99/00

Documentation searched other than minimum documentation to the extent that such documents are included in the fields searched

　　Published examined utility model applications of Japan 1922-1996
　　Published unexamined utility model applications of Japan 1971-2023
　　Registered utility model specifications of Japan 1996-2023
　　Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2005-285090 A (YAMAHA MOTOR CO., LTD.) 13 October 2005 (2005-10-13) paragraphs [0089]-[0090], [0092], [0117]-[0131], [0154]-[0160] | 1, 9, 17 |
| A | | 2-8, 10-16, 18-24 |
| A | JP 2007-172306 A (YAMAHA MOTOR CO., LTD.) 05 July 2007 (2007-07-05) entire text, all drawings | 1-24 |
| A | JP 2022-077760 A (FUJITSU LIMITED) 24 May 2022 (2022-05-24) entire text, all drawings | 1-24 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 May 2023** | **13 June 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/012942**

| Patent document cited in search report | | | Publication date (day/month/year) | Patent family member(s) | | | Publication date (day/month/year) |
|---|---|---|---|---|---|---|---|
| JP | 2005-285090 | A | 13 October 2005 | US | 2005/0143845 | A1 | |
| | | | | paragraphs [0138]-[0139], [0141], [0169]-[0183], [0209]-[0216] | | | |
| | | | | EP | 1548608 | A2 | |
| | | | | CN | 1637751 | A | |
| JP | 2007-172306 | A | 05 July 2007 | (Family: none) | | | |
| JP | 2022-077760 | A | 24 May 2022 | US | 2022/0147834 | A1 | |
| | | | | entire text, all drawings | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002203228 A

- JP 2022106186 A